# EUROPEAN PATENT APPLICATION

(11) **EP 4 606 216 A2**
(43) Date of publication of application: **27.08.2025**
(21) Application number: 25181184.0
(22) Date of filing: 06.02.2023
(51) Int. Cl.: A01K 89/01

(54) **FISHING SPINNING REEL**

(30) Priority: 31.03.2022 JP 2022057879
(62) Divisional of application: 23155196.1
(71) Applicant: Globeride, Inc., Higashikurume-shi, Tokyo 203-8511 (JP)
(72) Inventor: HORIE, Hironori, Tokyo, 203-8511 (JP); TSUSHIMA, Daisuke, Tokyo, 203-8511 (JP)
(74) Representative: Boult Wade Tennant LLP

(57) **Abstract**

A fishing spinning reel according to the present invention has a drive shaft that is rotationally driven by a rotation operation of a handle rotatably supported on a reel body, a one-way clutch that is disposed on the drive shaft and has an inner ring, an outer ring, and a holder holding a plurality of rolling members, and a cylindrical portion that is provided on the reel body and accommodates the one-way clutch. The outer ring is provided with a stopper protruding radially outward, and a circumferential wall of the cylindrical portion is provided with a notch portion penetrating the circumferential wall in a radial direction. The stopper of the outer ring is disposed in the notch portion so as to be exposed in the radial direction and the outer ring is fixed to be prevented from rotating.

## Description

### BACKGROUND OF THE INVENTION

### 1. TECHNICAL FIELD

The present invention relates to a fishing spinning reel, and more particularly to a fishing spinning reel incorporating a one-way clutch that prevents reverse rotation of a rotor.

### 2. DESCRIPTION OF THE RELATED ART

A fishing spinning reel has a structure including a rotor that rotates in conjunction with a winding rotation operation of a handle and a spool that moves back and forth. Generally, a fishing spinning reel incorporates a reverse rotation prevention mechanism that allows rotation of a rotor in a fishing line winding direction by a rotation operation of a handle and prevents reverse rotation of the rotor when the handle is to be reversely rotated.

For example, as disclosed in JP 2012-23965 A, the reverse rotation prevention mechanism is constituted by a one-way clutch including an inner ring that is fitted into a pinion gear integrally rotated by a rotation operation of a handle to prevent rotation, a holder that is disposed radially outside the inner ring and holds a plurality of rolling members, and an outer ring that is disposed radially outside the holder. A locking portion is formed on outer circumference of the outer ring at a predetermined interval in a circumferential direction, and the outer ring is fixed to a reel body to prevent rotation by fitting the locking portion into a locking groove formed in an inner surface of a cylindrical portion integrated with the reel body.

### RELEVANT REFERENCES

### LIST OF RELEVANT PATENT LITERATURE

Patent Literature 1: Japanese Application Publication No. 2012-23965

### SUMMARY OF THE INVENTION

The one-way clutch is stored in the cylindrical portion formed in the reel body. That is, since the entire outer ring is stored in the cylindrical portion, and the outer ring is fixed to prevent rotation by engaging irregularities formed on an outer peripheral surface of the outer ring and an inner peripheral surface of the cylindrical portion, there is a limit in reducing a size and a weight of the reel body, and there is room for improvement.

The present invention has been made in view of the above problems, and an object thereof is to provide a structure capable of reducing a size and a weight of a reel body in a fishing spinning reel incorporating a one-way clutch.

In order to achieve the above object, a fishing spinning reel according to the present invention has a drive shaft that is rotationally driven by a rotation operation of a handle rotatably supported on a reel body, a one-way clutch that is disposed on the drive shaft and has an inner ring, an outer ring, and a holder holding a plurality of rolling members, and a cylindrical portion that is provided on the reel body and accommodates the one-way clutch. The outer ring is provided with a stopper protruding radially outward, and a circumferential wall of the cylindrical portion is provided with a notch portion penetrating the circumferential wall in a radial direction. The stopper of the outer ring is disposed in the notch portion so as to be exposed in the radial direction and the outer ring is fixed to be prevented from rotating.

In the fishing spinning reel having the above-described configuration, the circumferential wall of the cylindrical portion provided in the reel body is provided with the notch portion penetrating the circumferential wall in the radial direction, and the stopper of the outer ring is disposed in the notch portion so as to be exposed in the radial direction and the outer ring is fixed to be prevented from rotating. As described above, since the configuration where the outer ring of the one-way clutch is fixed on the inner peripheral surface of the cylindrical portion of the reel body to prevent rotation is not used, the cylindrical portion can be reduced in diameter as much as possible, and the reel body can be reduced in size and weight.

A fishing spinning reel according to the present invention has a drive shaft that is rotationally driven by a rotation operation of a handle rotatably supported on a reel body, and a one-way clutch that is disposed on the drive shaft and has an inner ring, an outer ring, and a holder holding a plurality of rolling members. The outer ring is provided with a stopper protruding radially outward, and the reel body is provided with an abutting portion that abuts on the outer ring at two points on both side surfaces of the stopper to restrict rotation of the outer ring.

In the fishing spinning reel described above, the outer ring of the one-way clutch is provided with the stopper protruding radially, and the reel body is provided with the abutting portion that abuts on the outer ring at the two points on both the side surfaces of the stopper to restrict the rotation of the outer ring. Therefore, it is possible to simplify the structure of the portion for fixing the outer ring to prevent the rotation. As a result, it is possible to reduce the size and the weight of the reel body.

According to the present invention, it is possible to obtain a structure capable of reducing a size and a weight of a reel body in a fishing spinning reel incorporating a one-way clutch.
The following numbered clauses show further illustrative examples only:
1. A fishing spinning reel comprising:
   a drive shaft that is rotationally driven by a rotation operation of a handle rotatably supported on a reel body;
   a one-way clutch that is disposed on the drive shaft and has an inner ring, an outer ring, and a holder holding a plurality of rolling members; and
   a cylindrical portion that is provided on the reel body and accommodates the one-way clutch,
   wherein the outer ring is provided with a stopper protruding radially outward, and a circumferential wall of the cylindrical portion is provided with a notch portion penetrating the circumferential wall in a radial direction, and
   the stopper of the outer ring is disposed in the notch portion so as to be exposed in the radial direction and the outer ring is fixed to be prevented from rotating.
2. The fishing spinning reel according to clause 1, wherein two or more notch portions are provided at equal intervals in a circumferential direction of the circumferential wall, and the same number of stoppers as the number of the notch portions are provided.
3. The fishing spinning reel according to clause 1 or 2, wherein a diameter of an outer peripheral surface of the circumferential wall is same as an outermost diameter of the outer ring.
4. The fishing spinning reel according to any one of clauses 1 to 3, wherein a waterproof cap wrapping the cylindrical portion and the one-way clutch is provided.
5. A fishing spinning reel comprising:
   a drive shaft that is rotationally driven by a rotation operation of a handle rotatably supported on a reel body; and
   a one-way clutch that is disposed on the drive shaft and has an inner ring, an outer ring, and a holder holding a plurality of rolling members,
   wherein the outer ring is provided with a stopper protruding radially outward, and
   the reel body is provided with an abutting portion that abuts on the outer ring at two points on both side surfaces of the stopper to restrict rotation of the outer ring.
6. The fishing spinning reel according to clause 5, wherein the abutting portion is provided on a radially inner side of an outermost-diameter position of the stopper.

### BRIEF DESCRIPTION OF THE DRAWINGS

FIG. 1 is an exploded perspective view illustrating a first embodiment of a fishing spinning reel according to the present invention;
FIG. 2 is an axial cross-sectional view of a main portion of the fishing spinning reel illustrated in FIG. 1;
FIG. 3 is a cross-sectional view taken along the line A-A of FIG. 2;
FIG. 4 is a perspective view illustrating a fixed state of a one-way clutch;
FIG. 5 is a perspective view illustrating a state in which a cover member of a holder is disposed in the one-way clutch illustrated in FIG. 4;
FIG. 6 is an exploded perspective view illustrating a second embodiment of the fishing spinning reel according to the present invention; and
FIG. 7 is a perspective view illustrating a fixed state of a one-way clutch.

### DETAILED DESCRIPTION

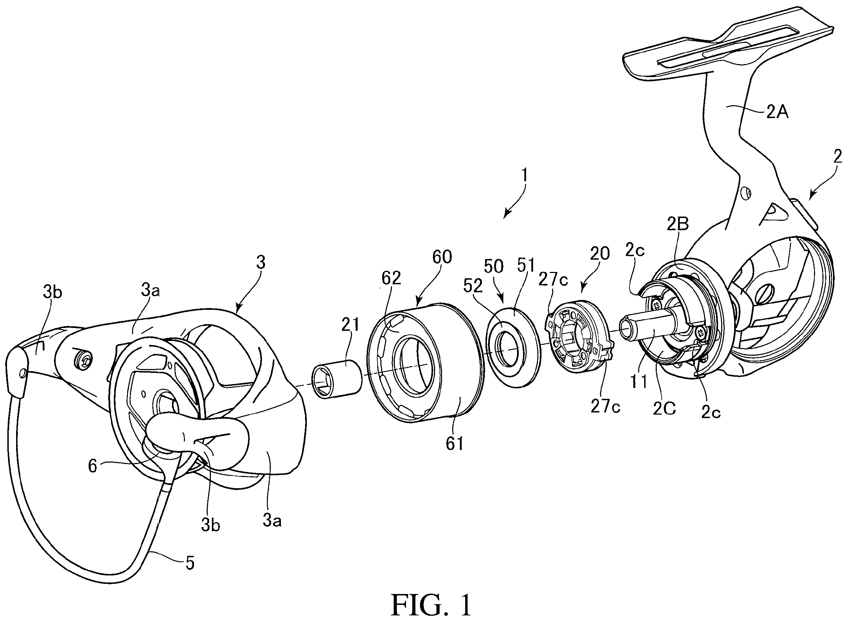

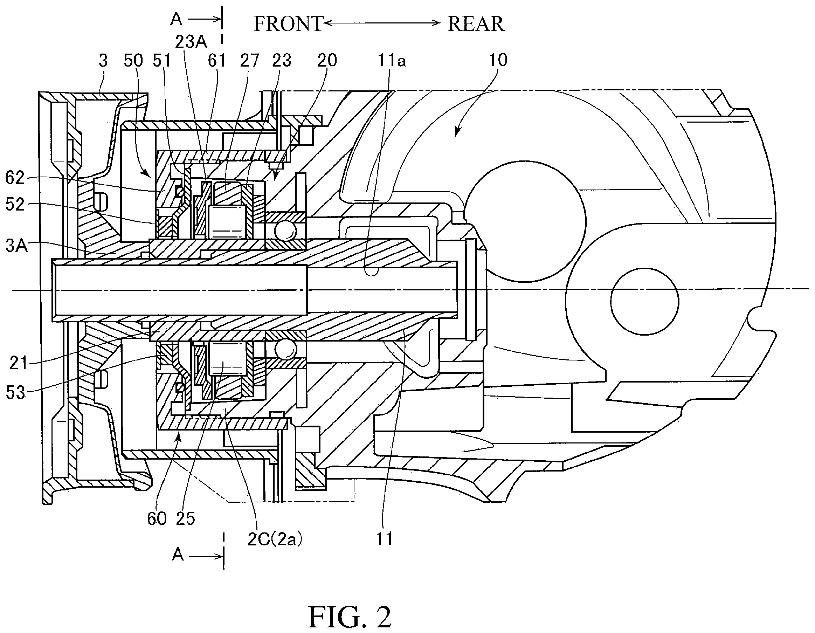

FIGS. 1 and 2 are diagrams illustrating a first embodiment of a fishing spinning reel according to the present invention. First, an outline of an overall configuration of the fishing spinning reel will be described. Note that, in the following description, "front and rear" mean directions illustrated in FIG. 2.

A reel leg 2A to be mounted on a fishing rod is formed integrally with a reel body 2 of a fishing spinning reel (hereinafter, referred to as the reel) 1 according to the present embodiment. A rotor 3 that is rotatably supported and a spool (not illustrated in the drawings) that is supported to be movable back and forth in synchronization with the rotational motion of the rotor 3 are disposed in front of the reel body 2.

The rotor 3 comprises a pair of arm portions 3a that rotates around the spool, and a bail support member 3b to which a base end of a bail 5 is attached is rotatably supported at a front end of each arm portion 3a between a fishing line winding position and a fishing line releasing position. In this case, one base end of the bail 5 is attached to a fishing line guide portion (line roller) 6 provided integrally with the bail support member 3b.

In the reel body 2, a handle shaft is rotatably supported via a bearing, and a handle is attached to a protrusion end of the handle shaft. The handle shaft is provided with a driving force transmission mechanism 10 that transmits a driving force to the rotor 3 to rotationally drive the rotor when the handle is rotationally operated.

As known, the driving force transmission mechanism 10 comprises a drive gear integrally rotatably mounted on the handle shaft, and a pinion 11 comprising a pinion tooth portion meshing with the drive gear. The pinion 11 extends in a front-rear direction orthogonal to the handle shaft, and has a function as a rotation drive unit (drive shaft) in which a cavity 11a extending in an axial direction is formed. In this case, a spool shaft that engages with a known oscillating mechanism moving the spool back and forth when the handle is rotationally operated is inserted through the cavity 11a, and the spool is mounted on a distal end thereof.

The pinion 11 is rotatably supported by the reel body 1. Further, the pinion 11 extends toward the spool side, and the rotor 3 is integrally rotatably attached to a distal end of the pinion 11. The rotor 3 is fixed by externally fitting a through-hole of a boss portion 3A formed at a center portion into the distal end of the pinion 11 and tightening a nut (not illustrated in the drawings). A one-way clutch 20 constituting a reverse rotation prevention device is disposed on the pinion 11.

With the above configuration, when the handle is wound, the rotor 3 is rotationally driven via the driving force transmission mechanism 10, and the spool is reciprocated in the front-rear direction via the oscillating mechanism and the spool shaft. Therefore, the fishing line is evenly wound around the spool via the fishing line guide portion 6 of the rotationally driven rotor 3.

Next, the one-way clutch 20 of the present embodiment will be described with reference to FIGS. 1 to 4.

As illustrated in FIG. 1, a base portion 2B formed in a substantially disk shape is disposed on the spool side of the reel body 2, and a cylindrical portion 2C is formed on a surface portion of the base portion 2B in the axial direction. The pinion 11 is rotatably supported through a center portion of the cylindrical portion 2C, and the one-way clutch 20 is disposed in an intermediate portion thereof.

The pinion 11 is rotationally driven via the drive gear by the rotation operation of the handle, and the one-way clutch 20 is disposed in the intermediate portion of the pinion 11 to allow rotation of the pinion 11 in the fishing line winding direction and prevent reverse rotation.

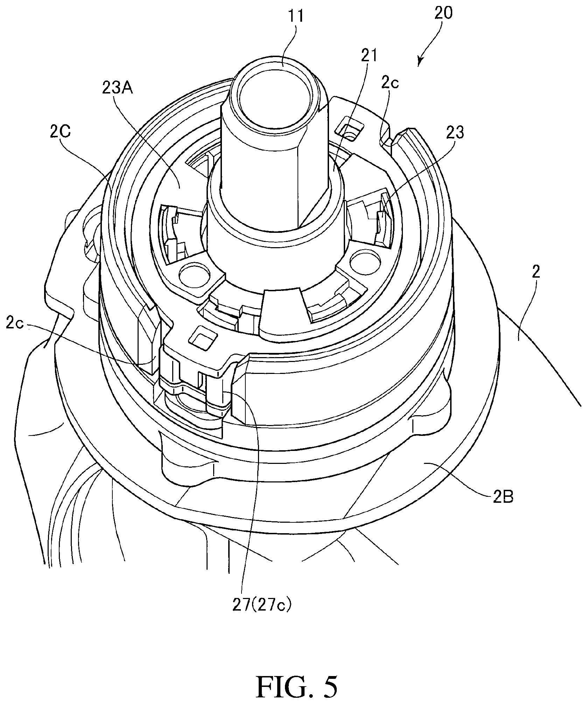

The one-way clutch 20 has an inner ring 21, an outer ring 27, and a holder 23 holding a plurality of rolling members 25, and further has a cover member 23A (see FIG. 5) integrated with the holder 23. These elements (or some elements) can be unitized in advance.

The inner ring 21 is prevented from rotating with respect to the pinion 11, and has a function as a drive shaft that rotates integrally with the pinion 11. Specifically, a cross section of the pinion 11 has a shape in which a non-circular portion is partially formed, and the inner ring 21 rotates integrally with the pinion 11 by fitting the non-circular portion of the inner ring 21 into this portion.

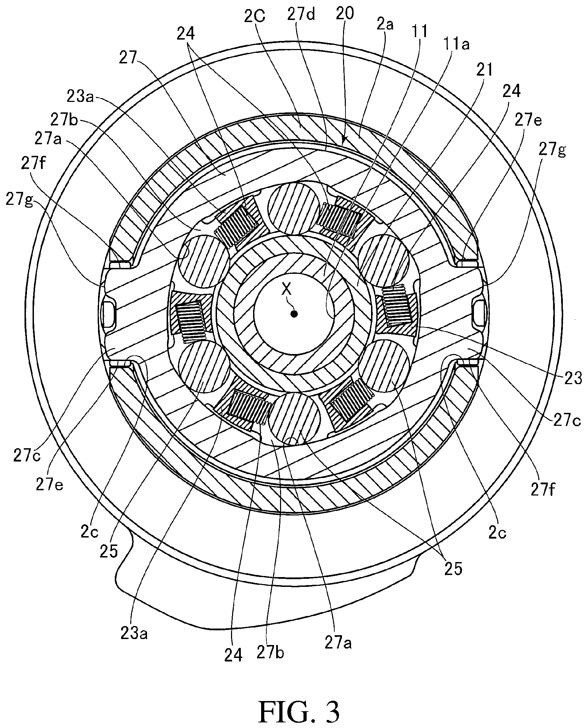

The holder 23 is disposed radially outside the inner ring 21 and comprises holding portions 23a disposed at regular intervals in a circumferential direction. A biasing spring 24 is disposed in each of the holding portions 23a to bias the rolling members 25 disposed between the holding portions in the circumferential direction (in FIG. 3, a counterclockwise direction; a reverse rotation direction).

The outer ring 27 is disposed radially outside the holder 23 and is formed in a substantially ring shape. On an inner peripheral surface of the outer ring 27, a wedge region 27a for blocking the rotation of each rolling member 25 and a free region 27b for freely rotating the rolling member 25 are formed. Each rolling member 25 held by the holder 23 is constantly biased to the side of the wedge region by the biasing spring 24. An outer peripheral surface 27d of the outer ring 27 is formed in a circular shape except for a portion where the following stopper 27c is formed.

A protrusion piece 27c is provided in a part of the outer ring 27 so as to protrude radially outward. The protrusion piece has a function as a stopper that restricts the rotation of the outer ring 27 (hereinafter, referred to as the stopper 27c). The stopper 27c is integrally formed so as to protrude radially outward from the outer peripheral surface 27d of the outer ring 27, and is provided at one or more places. In this case, there is a possibility that a large torque is applied to the outer ring, and stress concentrates at one place to cause a deviation or the like. Therefore, it is preferable to form two or more stoppers at equal intervals. In the present embodiment, two stoppers are provided so as to face each other with a center axis X therebetween at 180° intervals. The stopper 27c has a constant width in the circumferential direction, and both sides 27e and 27f in the circumferential direction have a rotation stopping function.

The cylindrical portion 2C protruding from the reel body 2 is provided with a notch portion 2c penetrating a circumferential wall 2a in the radial direction. The notch portion 2c is formed to such an extent that the stopper 27c of the outer ring 27 can be fitted. The stopper 27c is fitted into the notch portion 2c, and an exposed surface 27g is disposed so as to be exposed in the radial direction, so that the outer ring 27 is fixed to prevent the rotation (the rotation is restricted).

One or more notch portions 2c may be formed in the circumferential wall 2a. However, in the present embodiment, two notch portions 2c are formed at equal intervals in the circumferential direction (two notch portions symmetrical with respect to the center axis X at 180° intervals). That is, the same number of notch portions as the number of stoppers of the outer ring 27 may be provided.

An outer surface of the stopper 27c is exposed in the radial direction at the notch portion 2c of the cylindrical portion 2C, and can be pinched with a finger. For this reason, the outer ring 27 is easily pinched by the stopper, and the attachment/detachment workability of the one-way clutch 20 can be improved.

In the above configuration, a diameter of the circumferential wall 2a of the cylindrical portion 2C (a diameter of the outer circumferential surface of the circumferential wall) and an outermost diameter of the outer ring 27 (a diameter of the exposed surface 27g of the stopper 27c) are the same. In this case, the outer ring 27 is configured to be fitted into the circumferential wall 2a to generate a gap therebetween, so that a backlash can be prevented while rotational performance is secured, and miniaturization in the radial direction can be achieved. In addition, the attachment/detachment operation can be easily performed by providing a slight gap.

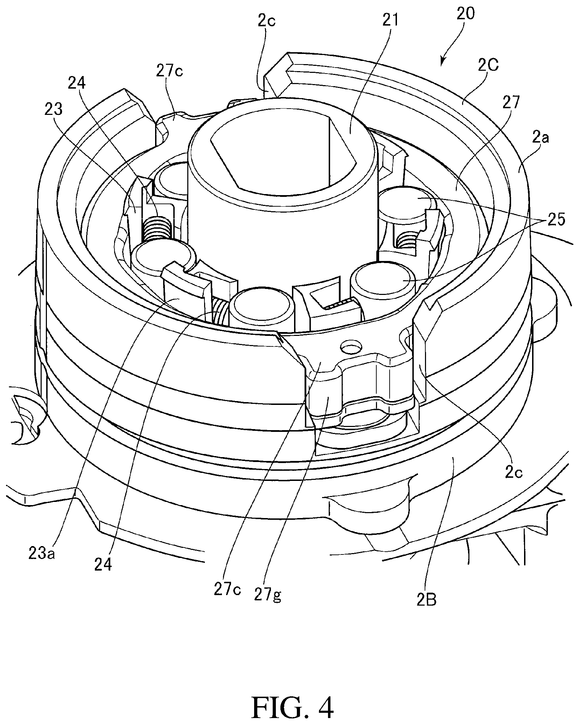

The one-way clutch 20 configured as described above is unitized and incorporated in the cylindrical portion 2C. In this case, as illustrated in FIG. 5, a lid (cover member) 23A that covers the holder 23 and the outer ring 27 is mounted on the surface portion of the outer ring 27 illustrated in FIG. 4, and the outer ring 27 is sandwiched between the holder 23 and the cover member 23A. An electrolytic corrosion prevention plate (anticorrosion plate) or the like may be mounted on the cover member 23A. A restriction plate may be disposed adjacent to the one-way clutch so as to restrict the axial movement of the one-way clutch 20. Alternatively, as illustrated in FIGS. 1 and 2, a magnetic seal mechanism 50 may be disposed so as to enhance waterproof and dustproof effects on the one-way clutch 20.

As known, the magnetic seal mechanism 50 comprises ring-shaped magnetic plates (electrode plates) 51 and 52 disposed with a minute gap between the magnetic plates and the outer peripheral surface of the drive shaft (inner ring 21), and a ring-shaped magnet 53 sandwiched between the magnetic plates, and has a configuration in which the gap between the drive shaft and the magnetic plate is filled with a magnetic fluid (see FIGS. 1 and 2).

In the present embodiment, a waterproof cap 60 is provided on the reel body so as to wrap the cylindrical portion 2C and the one-way clutch 20. The waterproof cap 60 has a shape including a cylindrical portion 61 surrounding the one-way clutch 20 and a cover portion 62 closing an opening on the spool side, and the magnetic plate 51 of the magnetic seal mechanism 50 is in close contact with an inner surface of the cover portion 62.

According to the one-way clutch 20 having the above-described configuration, rotation (reverse rotation) of the handle (rotor 3) in a fishing line feeding direction is prevented.

That is, when the pinion 11 is rotationally driven by rotationally operating the handle in a fishing line winding direction (rotationally driven in the clockwise direction in FIG. 3), the inner ring 21 rotates in the same direction together with the pinion 11. At this time, since the rolling member 25 held by the holder 23 moves to the free region 27b of the outer ring 27, the rotational force of the inner ring 21 is not transmitted to the outer ring 27, and the rotor 3 can rotate together with the pinion 11 without any problem.

On the other hand, when the inner ring 21 tries to rotate in the reverse direction (the rotor 3 rotates in the fishing line feeding direction) together with the pinion 11, the rolling member 25 held by the holder 23 rolls in the counterclockwise direction and is located in the wedge region 27a of the outer ring 27 by the biasing spring 24, so that the rotational force of the inner ring 21 is transmitted to the outer ring 27. Since the rotation of the outer ring 27 is restricted by the stopper 27c, reverse rotation of the pinion 11 and the rotor 3 is prevented.

In the above configuration, the circumferential wall 2a of the cylindrical portion 2C on the side of the reel body is provided with the notch portion 2c penetrating the circumferential wall 2a in the radial direction, and the stopper 27c formed in the outer ring 27 of the one-way clutch 20 is disposed in the notch portion so as to be exposed in the radial direction, so that the outer ring 27 is fixed to be prevented from rotating.

That is, since the outer ring 27 is not fixed by grooves, projections, or the like formed on the inner peripheral surface of the cylindrical portion unlike a conventional case, it is possible to reduce the diameter of the cylindrical portion 2C as much as possible and reduce the thickness of the cylindrical portion 2C, and it is possible to reduce the size and weight of the reel body.

Further, in the present embodiment, since the magnetic seal mechanism 50 is disposed on the spool side of the one-way clutch 20 and the waterproof cap 60 is provided so as to wrap the cylindrical portion 2C and the one-way clutch 20, it is possible to prevent entry of a foreign material such as moisture and dust and to enhance durability.

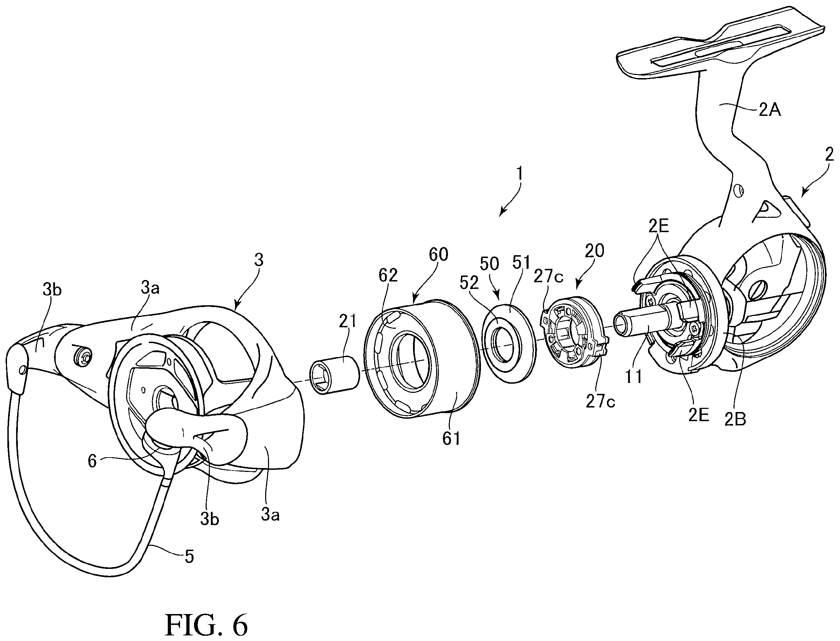

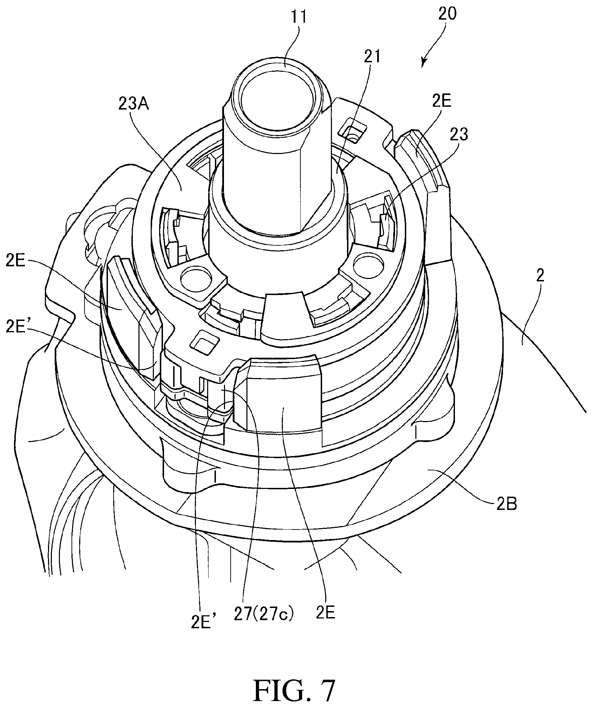

FIGS. 6 and 7 are diagrams illustrating a second embodiment of the fishing spinning reel according to the present invention.

A one-way clutch 20 of the present embodiment has the same configuration as that of the first embodiment, and an outer ring 27 is provided with stoppers 27c at 180° intervals. Similarly to the configuration illustrated in FIG. 5, the one-way clutch of the present embodiment may also be configured such that the cover member 23A of the holder 23 and the electrolytic corrosion prevention plate are mounted.

In the present embodiment, a reel body 2 is provided with an abutting portion 2E that abuts on the outer ring 27 at a side surface of the stopper 27c of the outer ring 27 and restricts the rotation of the outer ring 27. The abutting portion 2E is not configured in a cylindrical shape as in the first embodiment, but may have any structure as long as the abutting portion 2E protrudes in an axial direction and the side surface of the stopper 27c abuts on the abutting portion 2E to restrict the rotation. Therefore, in a case of a configuration in which one stopper is provided on the outer ring, the stopper may be provided to abut on the outer ring at two points on both sides in a circumferential direction of the stopper so as to restrict the rotation in both directions.

In the present embodiment, since the two stoppers 27c are formed at 180° intervals on the outer ring 27, the abutting portions 2E are provided on both sides in the circumferential direction of the respective stoppers, and the abutting portions 2E are configured to abut on the outer ring at two points on both sides in the circumferential direction of the respective stoppers (side surfaces 2E' of the abutting portions 2E).

According to such a configuration, even if the cylindrical portion having the notch portion is not provided unlike the first embodiment described above, the one-way clutch can be fixed to prevent rotation, and weight reduction and size reduction can be achieved. In such a configuration, since a space is generated around the abutting portion, the one-way clutch 20 can be easily attached and detached.

Furthermore, the abutting portion 2E is preferably formed so as to abut on the outer ring 27 at two points on the radially inner side of an outermost-diameter position of the stopper 27c of the outer ring 27.

In such a configuration, since the abutting portion 2E can be thinned, the weight can be further reduced.

The embodiment according to the present invention has been described above. The present invention is not limited to the embodiment described above, and various modifications can be made.

The shape of the stopper 27c having the above-described configuration can be appropriately modified. For example, the exposed surface 27g of the stopper may or may not protrude radially from the cylindrical portion 2C in the notch portion 2c of the cylindrical portion 2C. Further, in the configuration illustrated in FIG. 7, the stopper is configured to abut on the abutting portion 2E on both sides in the circumferential direction of the stopper. However, a recessed portion may be formed along the axial direction in the center portion of the stopper, and the abutting portion may be formed so as to be fitted into the recessed portion. Alternatively, an abutting portion extending in the axial direction with a U-shaped cross section may be provided on the reel body so as to abut on both sides of the stopper 27c.

In the embodiment described above, the reverse rotation of the rotor is prevented by fixing the holder 23. However, a structure may be adopted in which an operation member protruding to the outside of the reel body is provided, the rolling member is located in the free region by rotating the holder by the operation of the operation member, and the reverse rotation of the rotor is allowed.

### Reference Signs List

- 1: fishing spinning reel
- 2: reel body
- 2C: cylindrical portion
- 2c: notch portion
- 3: rotor
- 20: one-way clutch
- 27: outer ring
- 27c: stopper

## Claims

1. A fishing reel incorporating a one-way clutch that allows rotation of a rotation drive shaft supported in a reel body in one direction and prevents rotation in the other direction, wherein
the one-way clutch has an assembly structure comprising an inner ring, an outer ring, a first holder comprising a holding portion holding a biasing spring for biasing a plurality of rolling members, and a second holder attached to the first holder so as to hold the outer ring in an axial direction,
the reel body is provided with a regulation portion that is fixed so as to regulate the movement of the one-way clutch in a rotation direction,
the first holder and the outer ring are respectively provided with stoppers protruding radially outward, and
the movement of the one-way clutch in the rotation direction is regulated by the regulation portion of the reel body and each stopper.

2. The fishing reel according to claim 1, wherein
the regulation portion is a notch portion which is formed along a circumferential direction on a circumferential wall provided in the reel body and in which the stopper is disposed.

3. The fishing reel according to claim 2, wherein
two or more notch portions are provided at equal intervals in the circumferential direction of the circumferential wall, and the same number of stoppers as the number of the notch portions are provided.

4. The fishing reel according to claim 1 or 2, wherein
the outer ring has play with respect to the regulation portion.

5. The fishing reel according to claim 4, wherein
the first holder is in contact with the regulation portion without a gap.

6. The fishing reel according to claim 1, wherein
a positioning portion for positioning between the outer ring and the first holder or the second holder is provided between the outer ring and the first holder or the second holder.

7. The fishing reel according to claim 6, wherein
the positioning portion has a recess formed in an outer circumferential surface of the stopper of the outer ring, and a projection portion formed in the first holder or the second holder and fitted into the recess.

8. The fishing reel according to claim 6, wherein
the positioning portion has a recess formed in an inner circumferential surface of the outer ring, and a radial protrusion portion formed in the first holder or the second holder and fitted into the recess.

9. The fishing reel according to claim 2, wherein
an anticorrosion plate comprising a leg portion interposed between the stopper and the notch portion is disposed to overlap the one-way clutch in the axial direction.

10. A one-way clutch installed to allow rotation of a rotation drive shaft supported in a reel body of a fishing reel in one direction and prevent rotation in the other direction, wherein
the one-way clutch has an assembly structure comprising an inner ring, an outer ring, a first holder comprising a holding portion holding a biasing spring for biasing a plurality of rolling members, and a second holder attached to the first holder so as to hold the outer ring in an axial direction, and
the first holder and the outer ring are respectively provided with stoppers that protrude radially outward and overlap each other in the axial direction.

11. The one-way clutch according to claim 10, wherein
a positioning portion for positioning between the outer ring and the first holder or the second holder is provided between the outer ring and the first holder or the second holder.

12. The one-way clutch according to claim 11, wherein
the positioning portion has a recess formed in an outer circumferential surface of the stopper of the outer ring, and a projection portion formed in the first holder or the second holder and fitted into the recess.

13. The one-way clutch according to claim 11, wherein
the positioning portion has a recess formed in an inner circumferential surface of the outer ring, and a radial protrusion portion formed in the first holder or the second holder and fitted into the recess.
